# EUROPEAN PATENT APPLICATION

(11) **EP 3 451 267 A1**
(43) Date of publication of application: **06.03.2019**
(21) Application number: 17188891.0
(22) Date of filing: 31.08.2017
(51) Int. Cl.: G06Q 30/02

(54) **TARGETED OFFER GENERATION**

(71) Applicant: Mastercard International Incorporated, Purchase NY 10577 (US)
(72) Inventor: LYNCH, Richard, Co. Limerick (IE)
(74) Representative: Gill Jennings & Every LLP

(57) **Abstract**

The present disclosure relates to a method and computer system for generating targeted offers for a target user. In one aspect, a user information database comprising user data associated a plurality of users is accessed, the user data including transaction information relating to the plurality of users. User data associated with a target user of the plurality of users is retrieved. A user characterization engine processed the user data to characterize the target user according to a category in a predetermined set of categories. A prediction engine generates a prediction of a future purchase to be made by the target user based on the user's characterization category. An offer generation engine generates a targeted offer for the user based on the prediction of a future purchase. The target user is provided with the targeted offer via a computing device, preferably a mobile communication device, of the target user.

## Description

The present invention relates to a method and computer system for generating targeted offers for a target user.

### BACKGROUND

It is often desirable for details of offers for goods to be provided to potential purchasers. For simple untargeted offer distribution methods, such as the display of offers on billboard advertisements, the ability to direct offers to likely users is limited. The use of computer systems and digital communication provides more sophisticated means of targeting offers to user. In such systems, however, there is also a greater penalty, in terms of computational cost and communication channel bandwidth at least, for any ineffective offers delivered.

There is a need, therefore, for a method and system generating targeted offers wherein the impact of the offers is maximized and the technological burden of transmitting the offers is reduced.

### SUMMARY OF INVENTION

In an aspect of the disclosure, there is provided computer implemented method of generating offers for a target user, the method comprising: accessing a user information database comprising user data associated a plurality of users, the user data including transaction information relating to the plurality of users; retrieving, from the user information database, user data associated with a target user of the plurality of users; processing, using a user characterization engine, the user data associated with the target user to characterize the target user according to a category in a predetermined set of categories; generating, using a prediction engine, a prediction of a future purchase to be made by the target user based on the user's characterization category; generating, using an offer generation engine, a targeted offer for the user based on the prediction of a future purchase; providing the target user with the targeted offer.

By predicting a future purchase to be made by a user, the method of the present disclosure allows offers to be provided to potential users of the offers while avoiding the generation of redundant message that are not of interest to potential users.

Preferably, the user data associated with the target user comprises details of past transactions; and wherein the prediction of a future purchase to be made by the target user is also based on past transactions made by the target user.

Preferably, the prediction of a future purchase is for a repeat order of an item that has previously been purchased by the target user.

Preferably, the step of generating a prediction of a future purchase to be made by the target user is performed in response to receiving a notification of a new transaction made by the target user.

By generating predictions in response to new transactions made by a user, the present method allows predictions to be made in real time in response to a user's actions.

Preferably, the prediction of a future purchase is also based on details of the new transaction.

Preferably, the method further comprises obtaining a transaction location of the target user when making the first transaction by, upon receiving a notification of the new transaction, requesting current location coordinates from a mobile device of the target user.

By obtaining current coordinates from a user, offers may be generated for purchases that may be made in the vicinity of the user's current location.

Preferably, the transaction notification comprises a current location of the target user when making the new transaction.

Preferably, the prediction of the future purchase is based on the transaction location.

Preferably, the targeted offer is based on the location of the new transaction.

Preferably, the prediction of a future purchase is based on the transaction amount of the new transaction.

Preferably, the targeted offer is for a merchant located within a predetermined distance from the transaction location.

Preferably, the method further comprises adding details of the new transaction to the user information database.

Preferably, the categorization of the user is based on a payment account classification of the target user.

In another aspect of the disclosure, a computer system is provided for performing the method of the first aspect, the computer system comprising: a user information database having stored thereon user data associated a plurality of users; a user characterization engine configured to characterize the target user according to a category in a predetermined set of categories; a prediction engine configured to generate prediction of a future purchase to be made by the target user based on the user's characterization category; an offer generation engine configured to generate a targeted offer for the user based on the prediction of a future purchase; and a messaging module configured to generate and send and offer message to a mobile device.

In another aspect of the invention, there is provided a computer readable medium containing instructions which when executed cause a computer to perform a method of generating offers for a target user, the method comprising: accessing a user information database comprising user data associated a plurality of users, the user data including transaction information relating to the plurality of users; retrieving, from the user information database, user data associated with a target user of the plurality of users; processing, using a user characterization engine, the user data associated with the target user to characterize the target user according to a category in a predetermined set of categories; generating, using a prediction engine, a prediction of a future purchase to be made by the target user based on the user's characterization category; generating, using an offer generation engine, a targeted offer for the user based on the prediction of a future purchase; providing the target user with the targeted offer.

### BRIEF DESCRIPTION OF THE FIGURES

Figure 1 shows a schematic representation of a processing system according to examples of the disclosure.
Figure 2 shows an example of a communication system for use in examples of the present disclosure.
Figure 3 shows a flow diagram showing steps that can be undertaken in an example of the disclosure.

### DETAILED DESCRIPTION

The present disclosure comprises a method in which targeted offers are generated and provided to a target user. Also provided is a computer system configured to perform the method.

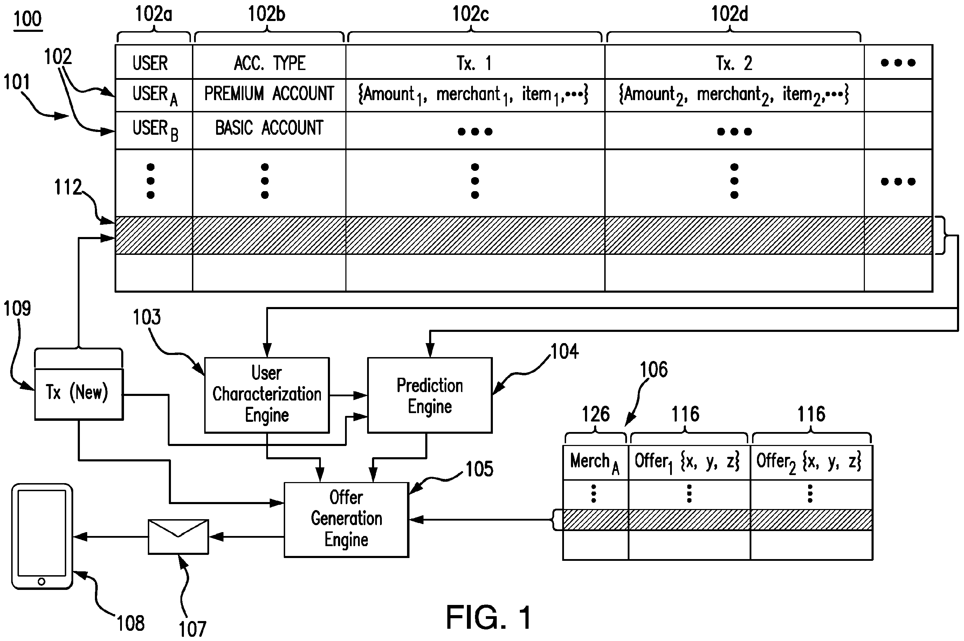

Figure 1 shows a schematic representation of a processing system 100 according to examples of the present disclosure.

The processing system 100 comprises a user information database 101 comprising a plurality of user data sets 102, each of which comprises information regarding payment transactions made by a given user. The user information database 101 is in electronic communication (wired or wireless) with a user characterization engine 103 that is adapted to process information included in the user information database 101 in order to categorize users. The user information database 101 and the user characterization engine 103 are in electronic communication with a prediction engine 104 configured to process data inputs to generate a prediction of a future transaction to be made by a user. The user characterization engine 103 and the prediction engine 104 are in electronic communication with an offer generation engine 105 configured to process data inputs to generate targeted offers for a user.

The offer generation engine 105 is also in electronic communication with an offer list database 106 comprising a set of available offers 116 associated with given merchants 126. The offer generation engine 105 is able to send electronic messages 107 comprising offer details to mobile devices 108 belonging to users associated with the user information database 101. In some examples the electronic messages 107 may be generated and sent by a messaging module (not illustrated) comprising a wireless communication node.

The user information database 101 and the offer list database 106 may be stored on one or more computer servers. The user information database 101 and the offer list database 106 may be stored on the same computer server.

The user characterization engine 103, the user prediction engine 104 and the offer generation engine 105 each comprise computer programs that are stored on one or more computer servers.

For simplicity, the following disclosure will treat the user information database 101, the offer list database 106, the user characterization engine 103, the user prediction engine 104 and the offer generation engine 105 as being stored on the same computer server and being operated by a central processor.

In some examples, the computer server forms part of a payment network, such the Mastercard payment network.

The user information database 101 comprises a plurality of data sets 102, each associated with a different user. Each data set 102 comprises a plurality of data elements providing information associated with the user. For example, a data set 102 may comprise a user identifier 102a, an account category 102b (indicating a tier of accounts, such as premier, basic etc.) and details of previous transactions 102c,102d. The user data set 102 may be linked to one or more payment cards or payment device, with the details of previous transactions being recorded for transactions made with the linked payment cards and payment devices.

In examples where the computer server forms part of a payment network, the details of previous transactions 102c,102d may each comprise all or part of an authorization message received during a payment transaction. The authorization messages may be formatted according to a messaging standard such as the ISO 8583 messaging standard. The transaction details may comprise a number of fields, such as a payment amount, a merchant to whom the payment is being made and an identifier of the item being purchased. In some examples the transaction details 102c,102d may comprise authorization messages that have been amended to remove certain confidential information. The payment network may update the user information table 101 on receipt of an authorization message during the processing of a payment transaction by appending details of the latest transaction to the user data set 102 corresponding to the originator of the transaction.

In other examples, the computer server is not part of a payment network and may receive details of a new transaction from a payment network or from an electronic device 108 of a user.

In the present disclosure, the computer server generates an offer for a particular target user. The computer server retrieves a target user data set 112 associated with the target user for whom the offer is to be generated. The target user data set 112 may be identified by searching the user information database 101 using the user identifier 102a associated with the target user.

The user characterization engine 103 processes data retrieved from the user information database 101 to categorize the user according to a set of predetermined classifications.

In some examples, the user characterization engine 103 initiates the categorization process by requesting a user data set 102 for a given user in response to receiving a notification of a new transaction made by that user.

In some examples, the user characterization engine 103 categorizes users based on their account type 102b. For example, users may be categorized as belonging either to a premier tier or to a standard tier (or any other category depending on which categories are provided in the set of predetermined classifications).

In some examples, the user characterization engine 103 further categorizes users based on previous transactions. For example, users may be categorized based on total spend amount in a preceding time period (e.g. spend in the last year) or by average spends over a time period (e.g. average monthly spend over the last six months). As a result, users may be categorized, for example, as "premier tier, high spending" customers.

In some examples, the user characterization engine 103 further categorizes users according to individual purchase amounts. For example, users who may large volumes or low cost purchases may be distinguished from users making small volumes of high cost purchases. A user may then be categorized, for example, as a "premier tier, high spending, high cost" customer.

The user characterization engine 103 provides the prediction engine 104 with a classification to which the user has been characterized. The prediction engine then generates a prediction of an item that the user will purchase in the future based on the characterization. For example, the prediction engine 104 may access an item database (not show) comprising a list of items that are popular amongst users of different characterizations and may select an item that is associated with the characterization of the user. For example, an item associated with "premier tier, high spending, high cost" consumers.

In some examples, the prediction engine 104 may also retrieve the user data set 102 from the user information database 101. The prediction of a future purchase can also be based on previous transactions. For example, the prediction engine 104 could determine that the user has previously purchased one or more of the items associated with "premier tier, high spending, high cost" consumers, and select one of the previously purchased items as its future purchase prediction.

In some examples, the prediction engine 104 may also retrieve data about a new transaction 109 that has been recently made by the user. The prediction of a future purchase can also be based on the new transaction 109. In some examples, new transactions for items in a certain category may be associated with a higher likelihood of future transactions of items in the same category or another category. For example, the prediction engine 104 may receive data 109 indicating a payment at a cocktail bar in the previous ten minutes. The prediction engine 104 may then associate this transaction with an increased likelihood that the user will visit a restaurant that evening.

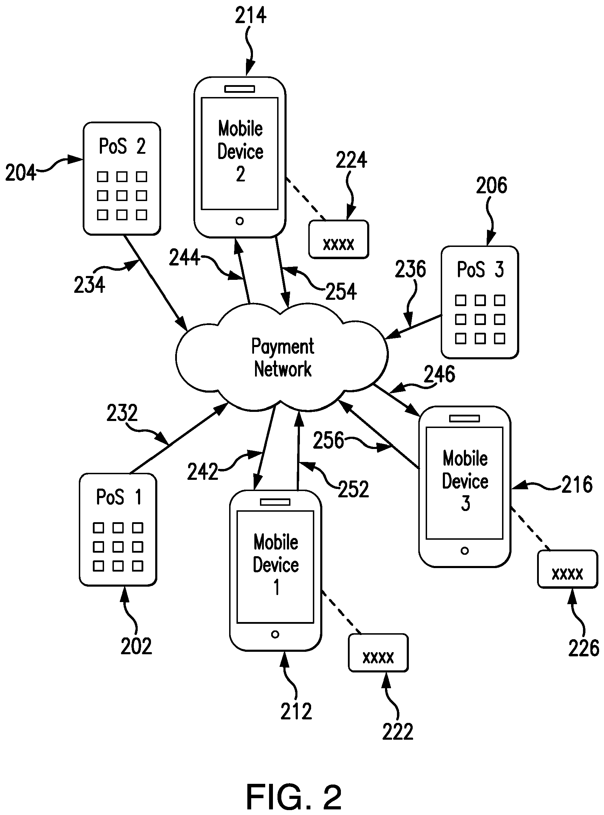

In some examples, the prediction engine 104 may also retrieve information regarding the current location of the user, as explained in more detail with reference to Figure 2. The prediction engine 104 can use this information to predict that a future transaction of the user is likely to be in the vicinity of the user's current location.

The prediction engine 104 provides the offer generation engine 105 with the prediction of a future purchase to be made by the user. The offer generation engine 105 generates an offer for the user based on the prediction of a future purchase to be made by the user.

In some examples, the offer generation engine 105 accesses a offer list database 106 comprising a set of offers 116 that are provided by various merchants 126. Each offer 116 in the set of offers may be tagged with indicators of one or more associated items. The one or more items may be items for which the offer relates and other similar items. The offers may also be tagged with an indication of a location where the offer may be redeemed.

The offer generation engine 105 can search the offer list database 106 for offers associated with tags corresponding to an item indicated in the prediction of a future purchase to be made by the user.

In some examples, the offer generation engine may be provided with a current location of the user (described in more detail with reference to Figure 2). The offer generation engine 105 may search the offer list database 106 only for offers tagged with locations within a predetermined distance of the user's current location. For example, the offer generation engine 105 may search the offer list database 106 only for offers tagged with a location within 2 miles of the user's current location.

The offer generation engine 105 may then provide the user with the offer retrieved from the offer list database 106. In some examples the offer may be communicated in the form of an email message 107 or a SMS message 107 or another suitable form of electronic communication. The contents of the offer may comprise a discount code or a website link allowing for a discounted purchase of an item.

Figure 2 shows an example of a system for obtaining a current location of a user in examples of the present disclosure where the computer server forms part of a payment network. In the example shown, the locations of a plurality of users are obtained by the computer server.

The computer server (and payment network) is in wired or wireless communication with a plurality of point-of-sale terminals 202;204;206 and a plurality of mobile devices 212;214;216. Each mobile device 212;214;216 comprises a positioning system such as a geolocation device or global positioning device that allows the mobile device to determine location data, such as a street name or geographical coordinates indicating the current location of the mobile device.

Each mobile device 212;214;216 is associated by the network with a payment card 222;224;226. Three point-of-sale terminals and three mobile devices are shown in Figure 2, though the skilled person shall understand that the system may comprise an arbitrary number of mobile devices and point-of-sale terminals. None of the mobile devices 212;214;216 is intrinsically linked to a given point-of-sale terminals 202;204;206 and there may be a different number of point-of-sale terminals 202;204;206 and mobile devices.

The payment network has access to a card-to-device database (not shown) on which a plurality of card-to-device records is stored. Each card-to-device record indicates that a given payment card 222;224;226 is associated with a given mobile device 212;214;216. Preferably, the card-to-device record comprises card identification information that is included in a standardized payment authorization request message, such as a primary account number (PAN) formatted in accordance with the ISO 8583 messaging standard. Preferably, the card-to-device record also comprises mobile device identification information that includes an address which the network can use to send a wireless communication to the mobile device 212;214;216.

When a cardholder initiates a payment transaction at a point-of-sale terminal 202;204;206 belonging to a merchant, an authorization request message 232;234;236 is sent from the point-of-sale terminal 202;204;206 to a payment network via an acquiring institution (not shown).

Upon receiving the authorization request message 232;234;236, the network identifies a mobile device 212;214;216 associated with the payment card 222;224;226. This is done by accessing the card-to-device database to retrieve a card-to-device record comprising data identifying the payment card 222;224;226 and an associated mobile device 212;214;216. In some examples, the card-to-device record is obtained by searching the card-to-device database for a card-to-device record comprising the PAN identified in the authorization request message 232;234;236.

Upon identifying the mobile device 212;214;216 associated with the payment card 222;224;226, the network sends a location request message 232;234;236 to the mobile device 212;214;216 to request location data identifying the current location of the mobile device 212;214;216.

Upon receiving the location request message 242;244;246, the mobile device 212;214;216 uses a positioning system to determine a set of location data 212;214;216 that identify its current location. In some examples, the location data 212;214;216 data may comprise geographical coordinates or an address (such as street number, street name, and postal/ZIP code). The mobile device 212;214;216 then sends a location data message 252;254;256 comprising the location data 216;217;218 to the network in response to the location request message 232;234;236.

In some examples the location data message 252;254;256 is provided to the prediction engine 104. In some examples, the location data message is provided to the offer generation engine 105.

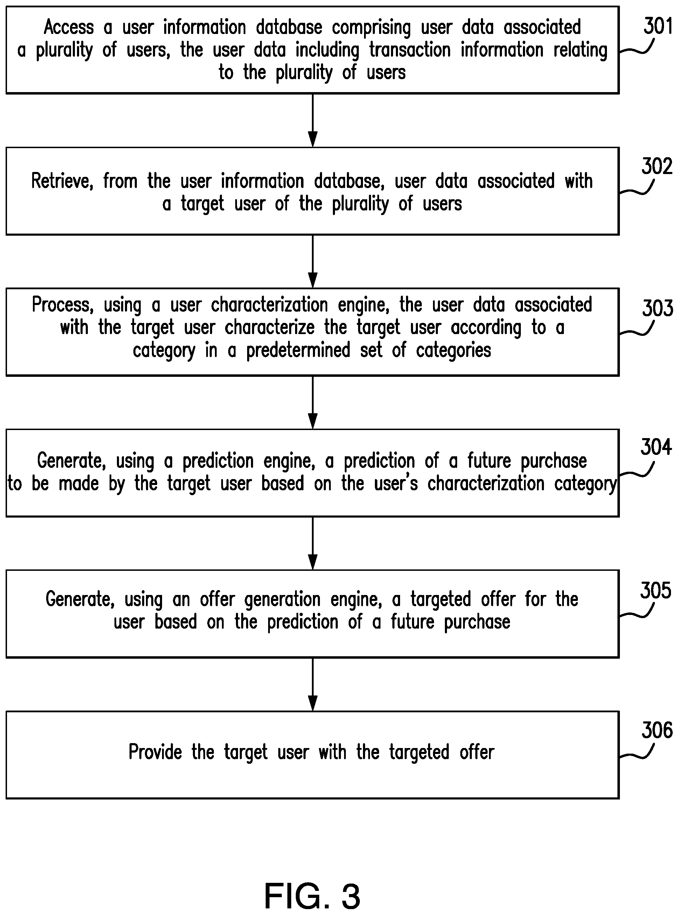

Figure 3 shows a flow diagram showing steps that can be undertaken by a computer system in an example of the disclosure.

In step 301, the computer system accesses a user information database 101 comprising user data 102 associated a plurality of users, the user data including transaction information relating to the plurality of users.

In step 302, the computer system retrieves, from the user information database 101, user data 102 associated with a target user of the plurality of users.

In step 303, the computer system processes, using a user characterization engine, the user data associated with the target user to characterize the target user according to a category in a predetermined set of categories.

In step 304, the computer system generates, using a prediction engine, a prediction of a future purchase to be made by the target user based on the user's characterization category.

In step 305, the computer system generates, using an offer generation engine, a targeted offer for the user based on the prediction of a future purchase.

In step 306, the computer system provides the target user with the targeted offer.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A computer implemented method of generating offers for a target user, the method comprising:
accessing a user information database comprising user data associated a plurality of users, the user data including transaction information relating to the plurality of users;
retrieving, from the user information database, user data associated with a target user of the plurality of users;
processing, using a user characterization engine, the user data associated with the target user to characterize the target user according to a category in a predetermined set of categories;
generating, using a prediction engine, a prediction of a future purchase to be made by the target user based on the user's characterization category;
generating, using an offer generation engine, a targeted offer for the user based on the prediction of a future purchase;
providing the target user with the targeted offer via a computing device, preferably a mobile device, associated with the target user.

2. The method of claim 1, wherein:
the user data associated with the target user comprises details of past transactions; and wherein
the prediction of a future purchase to be made by the target user is also based on past transactions made by the target user.

3. The method of claim 2, wherein the prediction of a future purchase is for a repeat order of an item that has previously been purchased by the target user.

4. The method of any preceding claim, wherein
the step of generating a prediction of a future purchase to be made by the target user is performed in response to receiving a notification of a new transaction made by the target user.

5. The method of claim 4, wherein the prediction of a future purchase is also based on details of the new transaction.

6. The method claim 4 or claim 5, further comprising obtaining a transaction location of the target user when making the first transaction by, upon receiving a notification of the new transaction, requesting current location coordinates from a mobile device of the target user.

7. The method of claim 4 of claim 5, wherein the transaction notification comprises a current location of the target user when making the new transaction.

8. The method of claim 6 or claim 7, wherein the prediction of the future purchase is based on the transaction location.

9. The method of any of claims 6-8, wherein the targeted offer is based on the location of the new transaction.

10. The method of any of claims 4-9, wherein the prediction of a future purchase is based on the transaction amount of the new transaction.

11. The method of any of claims 4-10, wherein the targeted offer is for a merchant located within a predetermined distance from the transaction location.

12. The method of any of claims 4-11, further comprising adding details of the new transaction to the user information database.

13. The method of any preceding claim, wherein the categorization of the user is based on a payment account classification of the target user.

14. A computer system for performing the method of any preceding claim, the computer system comprising:
a user information database having stored thereon user data associated a plurality of users;
a user characterization engine configured to characterize the target user according to a category in a predetermined set of categories;
a prediction engine configured to generate prediction of a future purchase to be made by the target user based on the user's characterization category;
an offer generation engine configured to generate a targeted offer for the user based on the prediction of a future purchase; and
a messaging module configured to generate and send and offer message to a mobile device.

15. A mobile communication device configured to perform a method of providing user data to a payment network and receiving offer data from the payment network the mobile device comprising:
a wireless communication node configured to receive, from a computer server of a payment network, a request for location data, the request for location data being triggered by a transaction processed by the payment network, wherein the transaction included payment credentials associated with the mobile communication device, and
a positioning system configured to determine, in response to the request for location data, location data corresponding to a current location of the mobile communication device,
wherein communication node is further configured to provide to the computer server of the payment network, in response to the request for location data, a location data message comprising the location data corresponding to the current location of the mobile communication device,
and wherein communication node is further configured to receive from the computer server of the payment network, a targeted offer that has been generated by the server of the payment network based on at least the location data and data associated with the transaction.
